Europäisches Patentamt

European Patent Office

Office européen des brevets

(11) Publication number: **0 046 383**
**B1**

## (12) EUROPEAN PATENT SPECIFICATION

(45) Date of publication of patent specification: **25.03.87**

(21) Application number: **81303709.0**

(22) Date of filing: **14.08.81**

(51) Int. Cl.⁴: **B 60 K 25/08**

(54) **Power take-off means in refrigerated vehicles.**

(30) Priority: **15.08.80 GB 8026634**

(43) Date of publication of application:
**24.02.82 Bulletin 82/08**

(45) Publication of the grant of the patent:
**25.03.87 Bulletin 87/13**

(84) Designated Contracting States:
**AT BE CH DE FR IT LI LU NL SE**

(56) References cited:
**US-A-2 023 856**
**US-A-2 127 152**
**US-A-2 784 596**
**US-A-3 774 709**

(73) Proprietor: **A.G. (PATENTS) LIMITED**
**Allied House 156 St.John Street**
**London, ECIP 1AR (GB)**

(72) Inventor: **Tate, Henry**
**26 Thurlestone Avenue**
**Ilford Essex (GB)**
Inventor: **Gould, John**
**18 Wymington Road**
**Rushden Northamptonshire (GB)**
Inventor: **Gillard, Kenneth**
**9 Woodrow Drive**
**Wokingham Berkshire (GB)**

(74) Representative: **Leale, Robin George et al**
**FRANK B. DEHN & CO. Imperial House**
**15-19 Kingsway**
**London WC2B 6UZ (GB)**

Courier Press, Leamington Spa, England.

## Description

This invention relates to the provision of power in unpowered trailer-type refrigerated vehicles, for example vehicles used to transport bulk supplies of ice-cream or frozen foods, in which power is required for running the refrigeration system.

Leaving aside the use of electric mains power which is of course only available when the vehicle is stationary at a suitable location, up to now the required power for running the refrigeration system of such a vehicle has been provided by a prime mover on another vehicle, for example the engine of a powered vehicle which pulls the unpowered vehicle. This has essentially involved the provision of power transmission connections between the two vehicles, with obvious and well known disadvantages, such as tedious and time-consuming operations in making and unmaking the connections, and the inconvenient and sometimes dangerous consequences that can result from an accidental breakage in such a connection or an omission to make it or unmake it at the appropriate time.

It is known from US—A—2784596 to provide a refrigerated vehicle having power take-off means connected to be driven by a pair of ground-engaging wheels disposed on one side of the vehicle. According to this specification, a drive pulley is secured between the two wheels and is operatively connected by an endless belt to the pulley of a compressor forming part of a refrigeration unit.

It has been proposed in US—A—3774709 to provide a drive system for a fertilizer spreading mechanism of an unpowered trailer, in which a drive shaft coaxial with a ground-engaging wheel of the trailer transmits drive inwardly through a non-rotary sleeve to a transmission unit. The trailer includes a frame which mounts the non-rotary sleeve separately and at a spacing from the transmission unit, so that a substantial portion of the drive shaft is exposed to the open air. ·

Viewed from one aspect the present invention provides an unpowered trailer-type refrigerated vehicle having power take-off means connected to be driven by at least one free-running ground-engaging wheel disposed on one side of the vehicle, caracterised in that said power take-off means comprises a drive shaft coaxial with and drivingly connected to said ground-engaging wheel and extending inwardly therefrom through a non-rotary hollow axle shaft of the wheel to a gear-box mounted to said axle shaft and drivingly connected to power the refrigeration system of the vehicle, the gear-box being arranged to be driven by said drive shaft from said one side only.

When a vehicle according to the invention is referred to as being "unpowered" it should be clearly understood that this term refers only to motive power and it is thus not intended to exclude from the scope of the invention vehicles which are provided additionally with some other power source which is not used to provide motive power.

Thus the invention provides an unpowered trailer-type refrigerated vehicle with its own self-contained source of power, driven by the rotation of one or more of its wheels in contact with the ground, and thus available whenever the vehicle is moving at a sufficient speed to provide useful power, and indeed at other times if the power is used to charge power storage means such as batteries.

Viewed from another aspect the invention provides an axle assembly for an unpowered trailer-type refrigerated vehicle as set forth above, characterised in that said axle assembly comprises a non-rotary hollow axle shaft adapted to mount at least one free-running ground-engaging wheel, power take-off means comprising a drive shaft extending through said axle shaft for driven connection to a said wheel on one side of the vehicle, said drive shaft being connected to a gear-box mounted to the said axle shaft and drivingly connectible to power the refrigeration system of the vehicle, the gear-box being arranged to be driven by said drive shaft from said one side only.

Preferably the said gear-box is arranged to transmit power from the said drive shaft laterally out of the line of the axle shaft, for connection to a subsequent power transmission element.

In one form in which the invention is applied to an axle shaft comprising a hollow inner axle beam connected to a solid outer stub axle which directly carries the brake shoes and directly rotatably mounts the brake drum of the wheel, the latter shaft is bored out axially to receive the said drive shaft, and the outer end of the drive shaft is adapted to be drivingly connected to a said wheel via a splined connection to a cap covering the outer end of the stub axle and secured to the outer face of the brake drum.

An embodiment of the invention will now be described by way of example and with reference to the accompanying drawings, in which:

Figure 1 is an axial cross-sectional view of an axle assembly according to the invention;

Figure 2 is a diagram further illustrating the general arrangement of the apparatus of Figure 1; and

Figure 3 is a diagram illustrating one way of incorporating the assembly of Figures 1 and 2 in a refrigerated vehicle according to the invention.

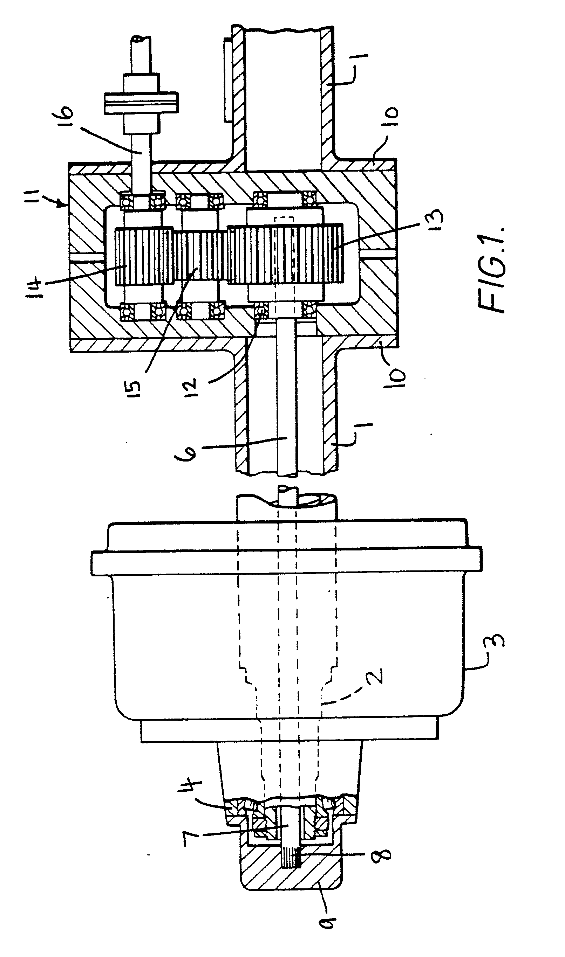

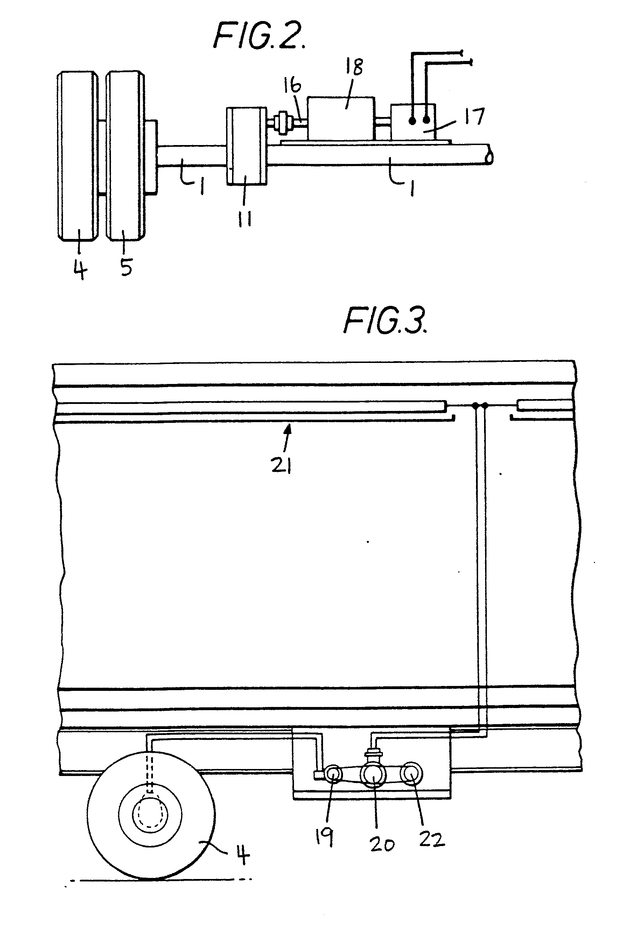

Referring first to Figure 1, there is shown an axle shaft comprising a hollow cylindrical non-rotary axle beam 1, and a non-rotary solid stub axle 2 which carries brake shoes and rotatably mounts a brake drum 3 carrying free-running ground-engaging wheels 4 and 5 (Figure 3). As so far described the apparatus is of a conventional nature. The axle beam 1 extends across the vehicle and carries a similar stub axle, brake drum and wheels at its other end.

Referring now to the modifications embodying the present invention, the stub axle 2 is bored out axially to receive a power take-off drive shaft 6 which at its outer end 7 is connected via splines 8 to a splined recess in a cap 9 bolted to the end face of the brake drum casting 3 and thus drivable in rotation by the wheels 4 and 5 in contact with the ground.

The axle beam 1 is split and flanged at 10 and a gear-box 11 is secured between the flanges. The output end of the drive shaft 6 is carried by bearings 12 in the gear-box and mounts a drive gear 13 which drives a driven gear 14 by way of an idler gear 15. An output shaft 16 extends from the driven gear 14 parallel to and above the axle beam 1.

The power take-off output shaft 16 may be used to power the refrigeration system of an unpowered trailer-type refrigeration vehicle in any desired manner. Purely by way of axample Figure 2 illustrates an arrangement in which the shaft 16 drives a hydraulic pump 17 by way of a gear-box 11 and, as shown in Figure 3, the pump 17 may be employed to drive a hydraulic motor 19 which itself drives a compressor 20 of a refrigeration system 21 of a refrigerated vehicle. Indicated at 22 in Figure 3 is an ancillary electric motor which drives the compressor when the vehicle is stationary, as is already common practice.

As an example of the power available, at a vehicle speed of 60 mph the wheels would typically turn at about 750 rpm which, using 2:1 gear ratio in the gear-box 11, provides an output shaft speed of 1500 rpm. Obviously the vehicle speed will continually vary, but if any particular use of the available power requires a substantially regular input then some form of variable transmission e.g. of the cone and belt type, could be incorporated.

Obviously more than one power take-off system in accordance with the invention could be incorporated in a single vehicle, driven by different wheels on the same and/or different axles.

## Claims

1. An unpowered trailer-type refrigerated vehicle having power take-off means connected to be driven by at least one free-running ground-engaging wheel (4, 5) disposed on one side of the vehicle, characterised in that said power take-off means comprises a drive shaft (6) coaxial with and drivingly connected to said ground-engaging wheel (4, 5) and extending inwardly therefrom through a non-rotary hollow axle shaft (1, 2) of the wheel to a gear-box (11) mounted to said axle shaft (1, 2) and drivingly connected to power the refrigeration system of the vehicle, the gear box being arranged to be driven by said drive shaft (6) from said one side only.

2. An axle assembly for an unpowered trailer-type refrigerated vehicle as claimed in claim 1, characterised in that said axle assembly comprises a non-rotary hollow axle shaft (1, 2) adapted to mount at least one free-running ground-engaging wheel (4, 5), power take-off means comprising a drive shaft (6) extending through said axle shaft (1, 2) for driven connection to a said wheel (4, 5) on one side of the vehicle, said drive shaft being connected to a gear-box (11) mounted to the said axle shaft (1, 2) and drivingly connectible to power the refrigeration system of the vehicle, the gear-box (11) being arranged to be driven by said drive shaft (6) from said one side only.

3. Apparatus as claimed in claim 1 or 2, caracterised in that the said gear-box (11) is arranged to transmit power from the said drive shaft (6) laterally out of the line of the axle shaft (1, 2).

4. Apparatus as claimed in any of claims 1 to 3, characterised in that said axle shaft (1, 2) includes a solid outer stub axle (2) which is bored axially to receive the said drive shaft (6).

5. Apparatus as claimed in claim 4, characterised in that the outer end (7) of the said drive shaft (6) is adapted to be drivingly connected to a said wheel (4, 5) via a splined connection (8) to a cap (9) covering the outer end of the stub axle and secured to a brake drum (3) rotatably mounted on the stub axle.

## Patentansprüche

1. Antriebsloses anhängerartiges, gekühltes Fahrzeug mit · einer Leistungsabnahmeeinrichtung, die derart angekuppelt ist, daß sie durch wenigstens ein auf einer Seite des Fahrzeugs angeordnetes, frei laufendes, bodenberührendes Rad (4, 5) angetrieben ist, dadurch gekennzeichnet, daß die Leistungsabnahmeeinrichtung eine Antriebswelle (6) aufweist, die koaxial und antriebsmäßig mit dem bodenberührenden Rad (4, 5) verbunden ist und sich davon durch eine undrehbare hohle Achse (1, 2) des Rades einwärts zu einem Getriebe (11) erstreckt, das an der Achse (1, 2) befestigt und zum Antreiben des Kühlsystems des Fahrzeugs entriebsmäßig angekuppelt ist, wobei das Getriebe so angeordnet ist, daß es nur von der einen Seite durch die Antriebswelle (6) angetrieben ist.

2. Achsanordnung für ein antriebsloses, anhängerartiges, gekühltes Fahrzeug wie es im Anspruch 1 beansprucht ist, dadurch gekennzeichnet, daß die Achseinrichtung eine wenigstens ein frei laufendes, bodenberührendes Rad (4, 5) haltende undrehbare hohle Achse (1, 2) aufweist, eine Leistungsabnahmeeinrichtung eine Antriebswelle (6) aufweist, die sich für eine Antriebsverbindung mit einem genannten Rad (4, 5) auf einer Seite des Fahrzeugs durch die Achse (1, 2) erstreckt, die Antriebswelle mit einem an der Achse (1, 2) befestigten Getriebe (11) verbunden und zum Antrieben des Kühlsystems des Fahrzeugs antriebsmäßig ankuppelbar ist, das Getriebe (11) so angeordnet ist, daß es nur von der einen Seite durch die Antriebswelle (6) angetrieben ist.

3. Gerätwie es in Anspruch 1 oder 2 beansprucht ist, dadurch gekennzeichnet, daß das Getriebe (11) so angeordnet ist, daß es von der Antriebswelle (6) Leistung seitlich aus der Mittellinie der Achse (1, 2) überträgt.

4. Gerät wie es in einem der Ansprüche 1 bis 3 beansprucht ist, dadurch gekennzeichnet, daß die Achse (1, 2) einen festen äußeren Achsstummel (2) aufweist, der zur Aufnahme der Antriebswelle (6) axial ausgebohrt ist.

5. Gerät wie in Anspruch 4 beansprucht, dadurch gekennzeichnet, daß das äußere Ende (7) der Antriebswelle (6) so ausgebildet ist, daß es mit einem genannten Rad (4, 5) über eine kerbverzahnte Verbindung (8) mit einer das äußere Ende des Achsstummels abdeckenden und an einer drehbar an den Achsstummel montierten Bremstrommel (3) befestigten Kappe (9) antriebsmäßig verbunden ist.

## Revendications

1. Véhicule réfrigérant du genre remorque non entrainée par moteur muni de moyens de prise de force reliés pour être entraines par au moins une roue folle (4, 5) en contact avec le sol disposée d'un côté véhicule, caractérisé en ce que lesdits moyens de prise de force comportent un arbre d'entraînement (6) coaxial avec ladite roue (4, 5) en contact avec le sol et relié de manière à être entrainé par celle-ci, ledit arbre s'étendant à partir de celle-ci vers l'intérieur à travers un essieu creux fixe (1, 2) de la roue vers une boîte d'engrenage (11) montée sur ledit essieu (1, 2) et relié de manière à entrainer le système frigorifique du véhicule, la boîte d'engrenage étant agencée de façon à être entrainée par ledit arbre d'entrainement (6) à partir dudit un côté seulement.

2. Ensemble d'essieu pour un véhicule réfrigérant du genre remorque non entrainée par moteur selon la revendication 1, caractérisé en ce que ledit ensemble d'essieu comporte un essieu creux fixe (1, 2) adapté pour recevoir au moins une roue folle (4, 5) en contact avec le sol, des moyens de prise de force comprenant un arbre d'entraînement (6) s'étendant à travers ledit essieu (1, 2) pour être relié de manière à être entrainé par l'une desdites roues (4, 5) d'un côté du véhicule, ledit arbre d'entraînement étant relié à une boîte d'engrenage (11) montée sur ledit essieu (1, 2) et qui peut être relié pour entraîner le système frigorifique du véhicule, la boîte d'engrenage (11) étant agencée de façon à être entraînée par ledit arbre d'entraînement (6) à partir dudit côté seulement.

3. Dispositif selon la revendication 1 ou 2, caractérisé en ce que ladite boîte d'engrenage (11) est agencée pour la transmission de force motrice dudit arbre d'entraînement (6) latéralement et de façon décalée par rapport à l'essieu (1, 2).

4. Dispositif selon l'une quelconque des revendications 1 à 3, caractérisé en ce que ledit essieu (1, 2) comprend un tronçon extérieur plein (2) qui est percé axialement pour recevoir ledit arbre d'entraînement (6).

5. Dispositif selon la revendication 4, caractérisé en ce que l'extrémité extérieure (7) dudit arbre d'entraînement (6) est adapté pour être relié à une desdites roues (4, 5) par l'intermédiaire d'une liaison cannelée (8) associée à un chapeau (9) recouvrant l'extrémité extérieure du tronçon et fixé à un tambour de frein (3) monté à rotation sur le tronçon.

FIG.1.

0 046 383

# FIG.2.

# FIG.3.